# EUROPEAN PATENT APPLICATION

(11) **EP 4 815 225 A1**
(43) Date of publication of application: **30.09.2026**
(21) Application number: 26157785.2
(22) Date of filing: 11.02.2026
(51) Int. Cl.: H02B 1/30

(54) **BASE ASSEMBLY FOR ELECTRICAL PANEL BOXES**

(30) Priority: 25.03.2025 IT 202500006090
(71) Applicant: GEWISS S.p.A., 24069 Cenate Sotto (Bergamo) (IT)
(72) Inventor: BOSATELLI, FABIO, 24069 CENATE SOTTO (BERGAMO) (IT)
(74) Representative: Forattini, Amelia

(57) **Abstract**

A base assembly for electrical panel boxes comprising two side ends (5, 105) each formed by two identical angular supports (3); the angular supports (3) comprising means of mutual engagement configured to form two side ends (5, 105) of different sizes. The side ends (5, 105) are joined by panels (7, 107), front and rear, produced in varying sizes in order to modify the dimensions of the base structure. The base structure according to the invention constitutes a kit adapted to support panel boxes of different sizes.

## Description

The present invention relates to a base structure for electrical panel boxes.

In particular, the present invention relates to a base for electrical panel boxes of type QP.

Electrical boxes or enclosures adapted to be placed on the ground are generally provided with a base.

Since electrical panel boxes come in different sizes, it is necessary to provide a base sized for each type of enclosure or box.

Bases produced in polyester and consisting of two angular elements, two front panels of fixed and standardised dimensions, are known.

Also known are bases produced in glass-fibre reinforced polyester, produced in one piece, available in two versions: closed and with ventilation grilles.

Known bases are produced with standardised dimensions and can only be used for the available boxes.

Therefore, the manufacturer must provide a specific base for each box model.

US2014/367544A1 discloses a mobile base system that allows for easy movement of point-of-sale merchandising units or displays, whether such a display is loaded with product or not. The system allows adaptation to different point-of-sale merchandising systems to be easily moved.

CN212571772U discloses an adjustable support for a switch cabinet having a mounting frame comprising a first connecting frame, a third connecting frame and two second connecting frames. Two ends of the first connecting frame are respectively connected with one end of the two second connecting frames. The other ends of the two second connecting frames are connected with the two ends of the third connecting frame, respectively.

CN115117753A discloses an adjustable mounting base for an electrical distribution station. The base comprises four first base assemblies, and each first base assembly comprises a tubular body.

The aim of the present invention is to provide a base assembly for electrical panel boxes that overcomes the drawbacks of the above-mentioned prior art.

Within the scope of this object, a particular aim of the invention is to provide a base assembly that can be easily adapted to boxes of different sizes.

A further object of the invention is to provide a base assembly that can reduce production costs.

A further object of the present invention is to provide an assembly which, due to its peculiar manufacturing characteristics, is able to ensure the most extensive guarantees of reliability and safety in use.

This aim and these and other objects which will become better apparent hereinafter are achieved by a base assembly for electrical boxes as claimed in the appended claims.

Further characteristics and advantages will become better apparent from the description of preferred but not exclusive embodiments of the invention, illustrated by way of non-limiting example in the accompanying drawings, wherein:

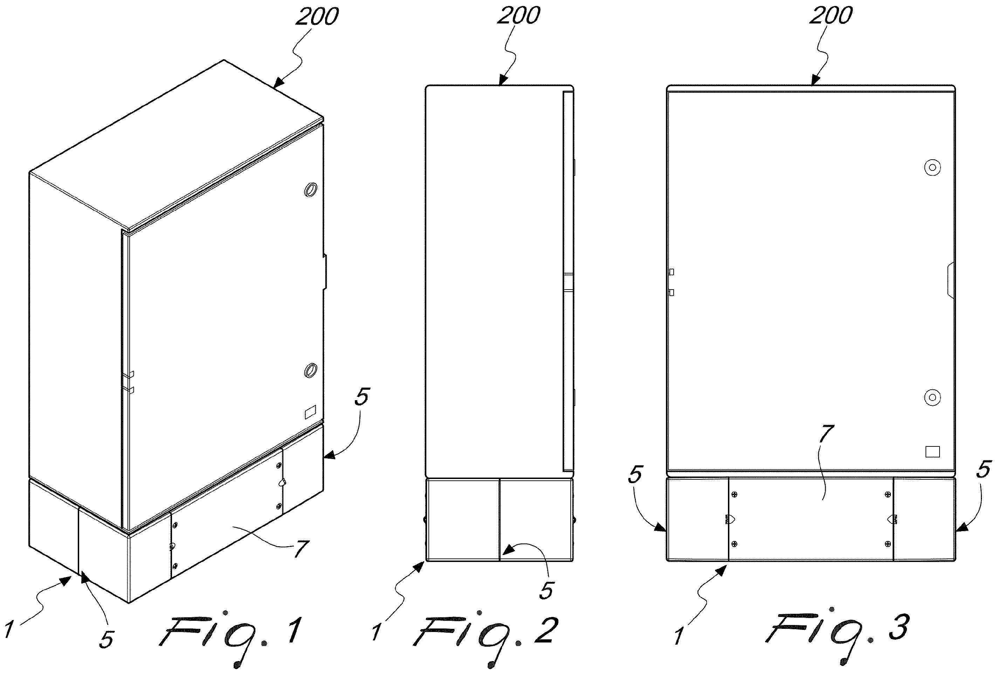

Figure 1 is a perspective view of a panel of a smaller size mounted on the base structure according to the invention;
Figure 2 is a side view of the panel of figure 1;
Figure 3 is a front view of the panel of figure 1;

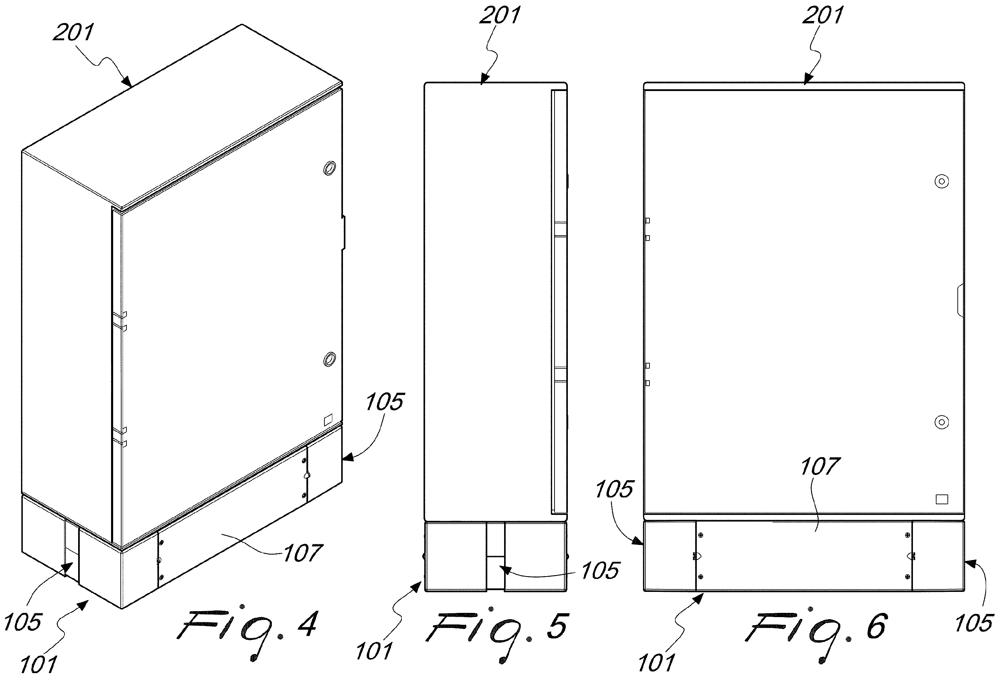

Figure 4 is a perspective view of a panel of a larger size, mounted on the base structure according to the invention;
Figure 5 is a side view of the panel of figure 4;
Figure 6 is a front view of the panel of figure 4;

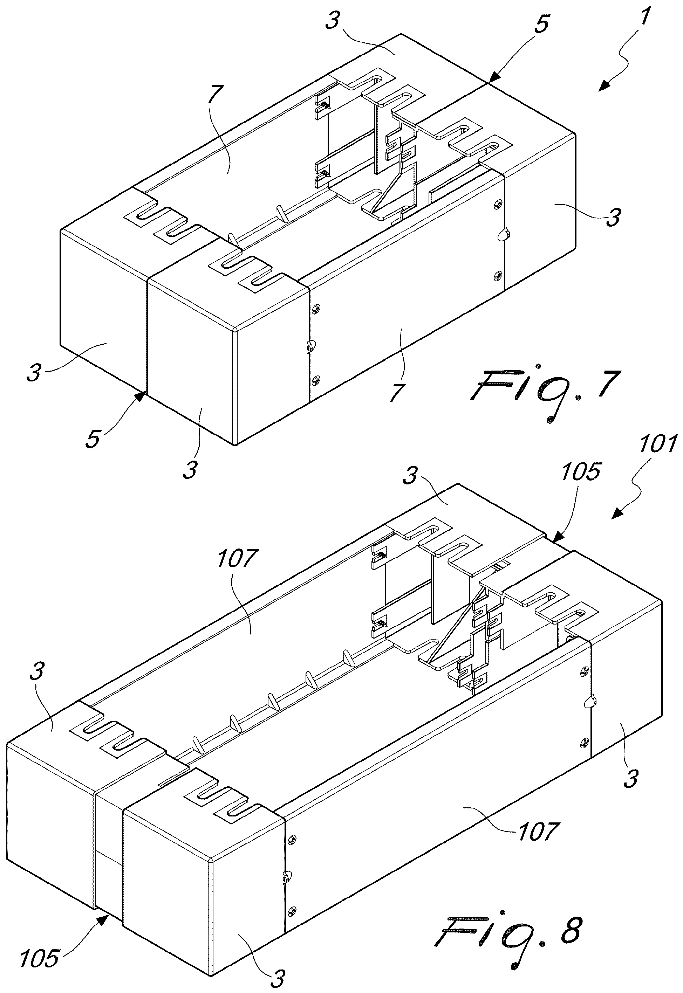

Figure 7 is a perspective view of the base assembled in the smaller size configuration;
Figure 8 is a perspective view of the assembled base in the larger size configuration;

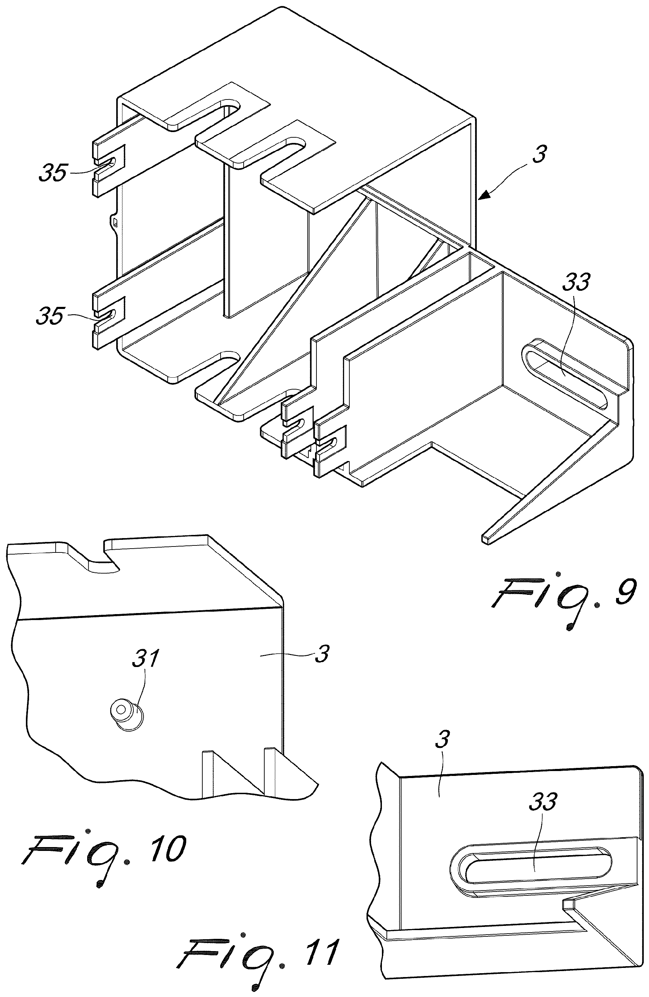

Figure 9 is a perspective view of an angular support;
Figure 10 is an enlarged perspective view illustrating the support boss area;
Figure 11 is an enlarged perspective view illustrating the slot area of the support;

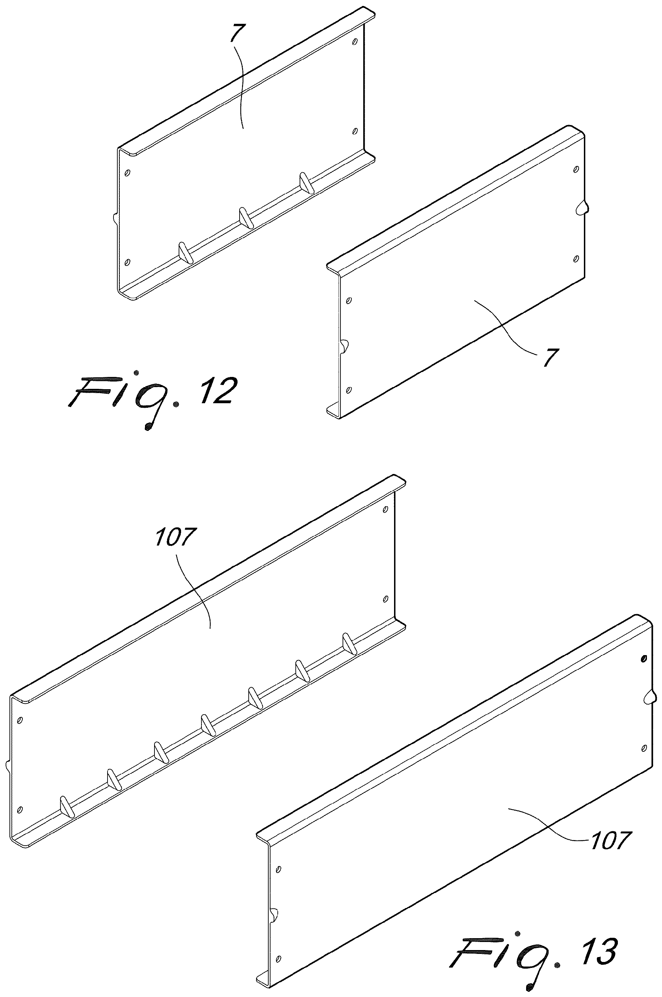

Figure 12 is a perspective view illustrating two panels for smaller size;
Figure 13 is a perspective view illustrating two panels for larger size;
Figure 14 is a perspective view illustrating two angular supports arranged to be combined in order to form one end of the base;
Figure 15 is a perspective view illustrating two supports assembled in closed mode in order to form a smaller size base end;
Figure 16 is a perspective view illustrating two supports assembled in open mode in order to form a larger base end;

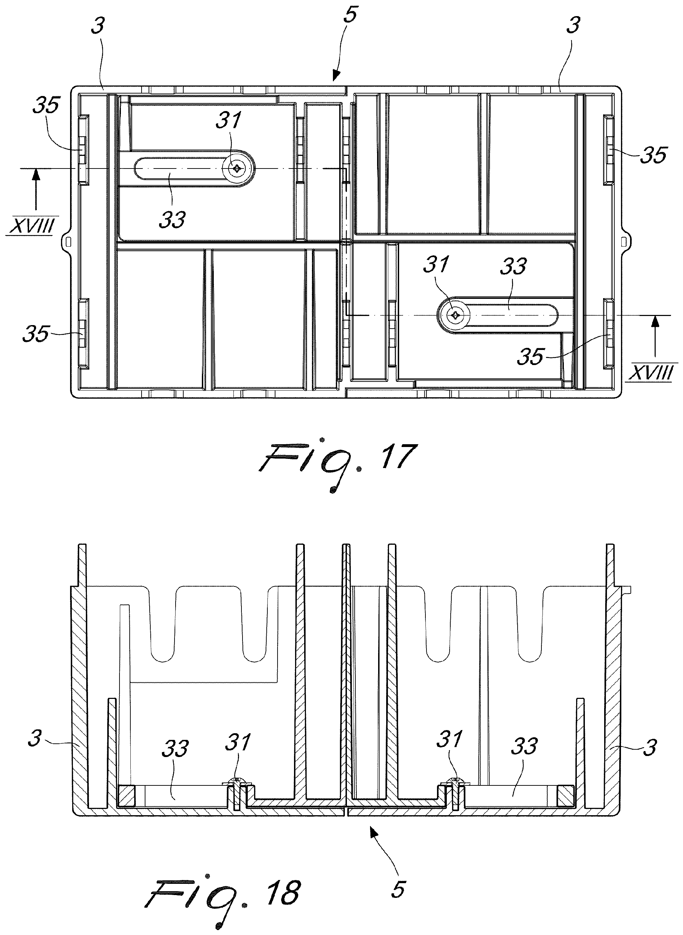

Figure 17 is a front view illustrating two supports assembled in closed mode;
figure 18 is a sectional view according to the sectional plane XVIII-XVIII of figure 17.

With reference to the figures, the base according to the invention, globally designated by reference numerals 1, 101, is configured to support at least two containment bodies, 200 and 201, adapted to accommodate electrical panels of different sizes.

The base 1, 101 comprises four angular supports, each indicated by reference numeral 3.

The angular supports 3 are joined two by two to form two side ends 5, 105.

The two side ends 5, 105 are associated with each other by means of two panels, 7, 107.

According to the present invention, two angular supports 3 can be assembled with each other in different configurations to form a side end 5, 105 of different sizes between a reduced, or closed, side end 5 and an expanded, or open, side end 105.

The different configurations of each side end 5, 105 are obtained by mounting the two angular supports 3, which are identical, in a different ways by means of reciprocal engagement means formed on each support.

The reciprocal engagement means comprise a boss 31 and a slot 33.

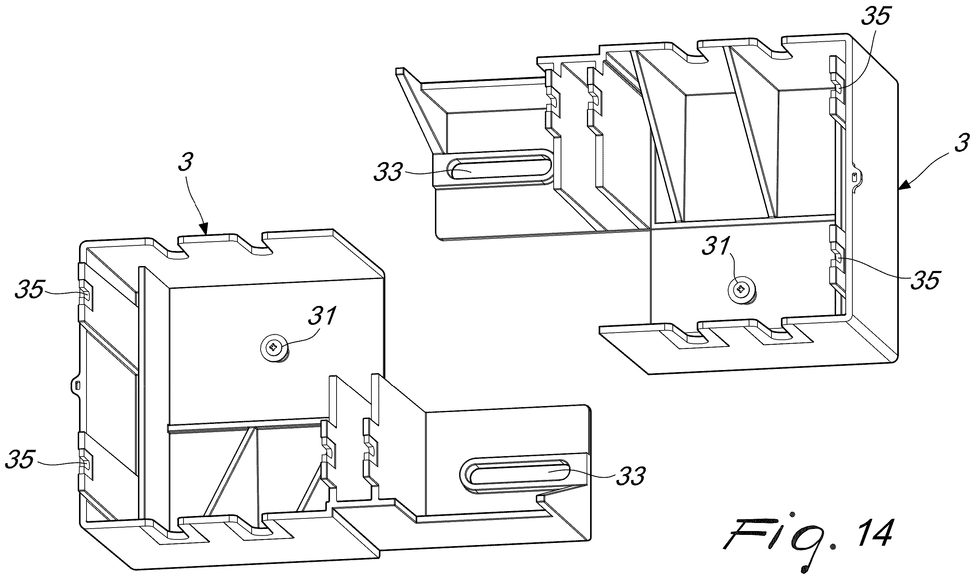

As better shown in figure 14, two angular supports 3 of one side end are arranged rotated 180° relative to each other and joined by engaging the boss 31 of one angular support with the slot 33 of the other angular support and vice versa.

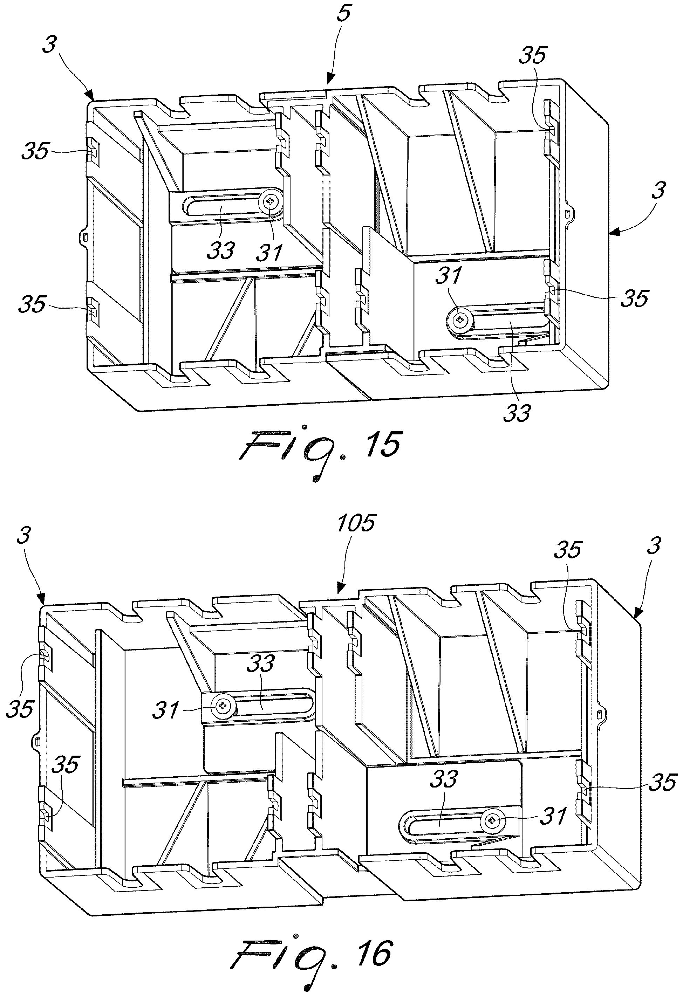

As shown in figures 15 and 16, the two angular supports can be mounted in two extreme configurations: a closed configuration (figure 15) or an open configuration (figure 16), depending on the type of panel to be assembled.

The two supports can also be joined and locked together in intermediate positions between the closed position (figure 15) and the open position (figure 16), depending on the size of the panel to be assembled.

The various configurations are possible thanks to the possibility of arranging the boss 31 in any position along the slot 33.

In the embodiment illustrated here, the two angular supports are locked in a selected configuration, closed or open, by means of a fastening system consisting of a screw screwed to the boss, with a bearing washer.

The mounting of the two supports is reversible.

The front dimensions of the base can be adjusted by combining the side ends 5, 105 by means of two panels of different sizes.

The panels 7, 107 are advantageously associated with the side ends 5, 105 by means of special coupling elements 35 formed in the angular supports 3.

In the present case, two types of panels are illustrated: a short panel 7, designed to form a smaller size base, indicated by reference numeral 1, and a long panel 107, designed to form a larger size base, indicated by reference numeral 101.

Each base advantageously comprises two panels 7, 107, one front panel and one rear panel, removable for inspection.

The base assembly according to the invention is quickly assembled to be easily adapted to the size of the panel box to which it is to be applied, which, in the embodiments described herein, may be a smaller or larger panel box.

The adaptability of the base assembly is allowed by the modular construction of the side ends 5, 105 obtained by assembling two angular supports 3 which are identical elements.

Therefore, it is possible to produce a single base kit which can be used to fix panels of different sizes to the floor.

The present invention offers the important advantage of permitting the production of a single angular support in order to make base structures of different sizes.

According to the present invention, only one mould is needed to make a single angular support, which is used four times for each kit, which can be used for panels of different sizes, thereby considerably reducing production costs.

In practice, it has been found that the invention achieves the intended aim and objects.

## Claims

1. A base assembly for electrical panel boxes **characterized in that** it comprises two side ends (5, 105); each of said side ends (5, 105) comprising two identical angular supports (3); said angular supports (3) comprising means of mutual engagement configured to form two side ends (5, 105) of different sizes.

2. The base assembly according to claim 1, **characterized in that** said means of mutual engagement comprise a boss (31) and a slot (33) formed on each of said angular supports (3).

3. The base assembly according to claim 1 or 2, **characterized in that** said angular supports (3) forming said one side end (5, 105) are mutually associated at 180° with each other and are joined by engaging said boss (31) of one angular support (3) with said slot (33) of the other angular support.

4. The base assembly according to one or more of the preceding claims, **characterized in that** said two angular supports (3) forming said side end (5, 105) are joined and spaced apart from each other according to the arrangement of said boss (31) along said slot (33).

5. The base assembly according to one or more of the preceding claims, **characterized in that** said two supports (3) forming said side end (5, 105) are locked together by means of a fastening system comprising a screw screwed to said boss (31), with a bearing washer.

6. The base assembly according to one or more of the preceding claims, **characterized in that** it comprises panels (7, 107) connecting said side ends (5, 105).

7. The base assembly according to one or more of the preceding claims, **characterized in that** it comprises coupling elements (35) formed in each of said angular supports (3); said panels (7, 107) being associated with said side ends (5, 105) by means of said coupling elements (35).
